# EUROPEAN PATENT APPLICATION

(11) **EP 4 640 907 A1**
(43) Date of publication of application: **29.10.2025**
(21) Application number: 23907588.0
(22) Date of filing: 14.12.2023
(51) Int. Cl.: C22C 38/58, C22C 38/50, C22C 38/48, C22C 38/46, C22C 38/44, C22C 38/42, C21D 8/02, C21D 9/46

(54) **STEEL SHEET AND METHOD FOR MANUFACTURING SAME**

(30) Priority: 21.12.2022 KR 20220181110
(71) Applicant: POSCO Co., Ltd, Pohang-si, Gyeongsangbuk-do 37859 (KR)
(72) Inventor: LEE, Jae-Hoon, Gwangyang-si, Jeollanam-do 57807 (KR); HAN, Seong-Ho, Gwangyang-si, Jeollanam-do 57807 (KR); CHOI, Yong-Hoon, Gwangyang-si, Jeollanam-do 57807 (KR)
(74) Representative: Meissner Bolte Partnerschaft mbB
(86) International application number: PCT/KR2023/020648
(87) International publication number: WO 2024/136302

(57) **Abstract**

A steel sheet and a method for manufacturing same are provided. The steel sheet of the present invention comprises, by weight%, C: 0.03 to 0.18%, Si: 0 to 0.70%, Mn: 0.25 to 1.80%, Al: 0 to 0.70%, P: 0.050% or less, S: 0.0300% or less, N: 0.0300% or less, Ti: 0 to 0.08%, Nb: 0 to 0.06%, V: 0 to 0.07%, Ti+Nb+V: 0.03 to 0.10%, Cr: 0 to 0.80%, Mo: 0 to 0.80%, Cu: 0 to 0.80%, Ni: 0 to 0.80%, B: 0 to 0.0050%, Ca: 0 to 0.050%, REM except for Y: 0 to 0.050%, Mg: 0 to 0.050%, W: 0 to 0.50%, Zr: 0 to 0.50%, Sb: 0 to 0.50%, Sn: 0 to 0.50%, Y: 0 to 0.20%, Hf: 0 to 0.20%, the balance being Fe and inevitable impurities, and includes, by area%, pearlite containing cementite: 1-15%, the balance being ferrite and unavoidably introduced structures.

## Description

### Technical Field

The present disclosure relates to a steel sheet which may be used for various purposes including parts for an automobile, home appliance, and a steel structure, and more particularly, a steel sheet having excellent balance of ductility, formability and yield ratio, and a method for manufacturing the same.

### Background Art

A cold rolled or plated steel sheet used in an automobile, home appliance, and a steel structure may require a sufficient yield ratio along with excellent ductility and formability.

As methods to increase yield strength, a solid solution strengthening steel sheet and a precipitation strengthening steel sheet may be used.

A solid solution strengthening steel may increase yield strength by solid-solution of solid solution strengthening elements (Mn, Si, Cr, etc.) in a ferrite phase having excellent formability. However, Si or Cr may easily form oxide on the surface of the steel sheet in a continuous annealing line or a continuous melting alloy plating line. Also, Mn may promote a low-temperature transformation phase (bainite or martensite), and the low-temperature transformation phase may lower yield strength. Accordingly, solid solution strengthening steel including a large amount of Mn, Si, and Cr added may not be suitable as a method to increase a yield ratio of a steel sheet having tensile strength of 410 MPa or more.

Precipitation-strengthened steel using Nb, Ti, V, or the like, may improve yield strength by precipitating micro-carbides in ferrite. A precipitation-strengthened steel may increase a yield ratio without deteriorating workability such that a precipitation-strengthened steel may be a strengthening mechanism suitable for a steel sheet having tensile strength of 410 MPa or more and excellent workability.

As a technology for improving formability and a yield ratio of steel sheet, a method of including unrecrystallized ferrite and using addition of Ti or Nb is disclosed in cited documents 1 and 2. Precipitation-strengthened using Ti or Nb and unrecrystallized ferrite may directly strengthen ferrite and may thus be effective in increasing yield strength without significantly increasing tensile strength.

As for the manufacturing method described in cited document 1, a yield ratio (YR) may partly satisfy 0.7 to 0.85, or a product of the square of the tensile strength and the square root of the hole expandability (TS²×√HER) may satisfy 1.4-3.0×10⁶ (MPa)²%^{0.5}. However, the product of the square of the tensile strength and the square root of the elongation (TS²×√EL) may not satisfy 0.7-1.7×10⁶ (MPa)²%^{0.5}.

Also, as for the manufacturing method described in cited document 2, the product of the square of the tensile strength and the square root of the hole extensibility (TS²×√HER) may satisfy 1.4-3.0×10⁶ (MPa)²%^{0.5}, or the product of the square of the tensile strength and the square root of the elongation (TS²×√EL) may satisfy 0.7-1.7×10⁶ (MPa)²%^{0.5}.

This may indicate that the steel sheet including unrecrystallized ferrite may not be suitable for manufacturing a steel sheet having an excellent balance of ductility, formability, and yield ratio, and thus, there has been a continuous demand for technological development therefor.

### [Prior art]

### [Patent Reference]

(Cited document 1) Japanese Laid-Open Patent Publication No. 2009-114523
(Cited document 2) Japanese Laid-Open Patent Publication No. 2017-002333

### Detailed description of present disclosure

### Technical problems to solve

An aspect of the present disclosure is to provide a cold rolled steel sheet or an alloy-plated steel sheet having excellent balance of ductility, formability and yield ratio without including unrecrystallized ferrite of a steel sheet, or a method for manufacturing the same. That is, the purpose of the present disclosure is to provide a steel sheet having excellent balance of YR, TS²×√EL, and TS²×√HER and a method for manufacturing the same.

The technical problems to be achieved in the present disclosure are not limited to the technical problems mentioned above, and other technical problems not mentioned will be clearly understood by a person having ordinary skill in the technical field to which the present disclosure belongs from the description below.

### Solution to Problem

An aspect of the present disclosure provides a steel sheet including
by weight%, C: 0.03-0.18%, Si: 0-0.70%, Mn: 0.25-1.80%, Al: 0-0.70%, P: 0.050% or less, S: 0.0300% or less, N: 0.0300% or less, Ti: 0-0.08%, Nb: 0-0.06%, V: 0-0.07%, Ti+Nb+V: 0.03-0.10%, Cr: 0-0.80%, Mo: 0-0.80%, Cu: 0-0.80%, Ni: 0-0.80%, B: 0-0.0050%, Ca: 0-0.050%, REM excluding Y: 0-0.050%, Mg: 0-0.050%, W: 0-0.50%, Zr: 0-0.50%, Sb: 0-0.50%, Sn: 0-0.50%, Y: 0-0.20%, Hf: 0-0.20%, and a balance of Fe and inevitable impurities; and
having a steel sheet microstructure including, by area%, pearlite containing cementite: 1-15%, and a balance of ferrite and inevitable structures,
wherein a yield ratio (YR) of the steel sheet is 0.70-0.85, and a product of a square of tensile strength of the steel sheet and a square root of an elongation (TS²×√EL) satisfies 0.7×10⁶-1.7×10⁶ (MPa)²%^{0.5}, and a product of a square of tensile strength of the steel sheet and a square root of hole expandability (TS²×√HER) satisfies 1.4×10⁶-3.0×10⁶ (MPa) ²%^{0.5}.

By weight%, the steel sheet contains C in a range of 0.04-0.17%.

By weight%, the steel sheet contains Mn in a range of 0.27-1.78%

The steel sheet has a microstructure including, by area%, pearlite including cementite: 3-13%, and a balance of ferrite and inevitable structures.

A yield ratio (YR=YS/TS), which is yield strength (YS) of the steel sheet divided by tensile strength (TS), satisfies 0.71-0.84.

A product of a square of tensile strength of the steel sheet and a square root of an elongation (TS²×√EL) satisfies 0.71×10⁶-1.69×10⁶ (MPa)²%^{0.5}.

A product of a square of tensile strength of the steel sheet and a square root of hole expandability (TS²×√HER) satisfies 1.43×10⁶-2.93×10⁶ (MPa)²%^{0.5}.

An aspect of the present disclosure provides a method of manufacturing a steel sheet including
heating an ingot or a slab having the above-described composition components in a temperature range of 1000-1350°C;
manufacturing a hot-rolled steel sheet by hot-rolling the heated ingot or slab at a finish rolling temperature of 800-1000°C;
cooling the manufactured hot-rolled steel sheet, and coiling the steel sheet in a temperature range of 300-600°C;
heat-treating the coiled hot-rolled steel sheet in a temperature range of 650-800°C for 600-1700 seconds, and cold-rolling the steel sheet at a reduction ratio of 30-90%;
heating the rolled cold-rolled steel sheet in a temperature range of 740-860°C and primary-holding the steel sheet for 50 seconds or more;
primary-cooling the primarily held cold-rolled steel sheet to a temperature range of 600-760°C at an average cooling rate of 5°C/s or lower; and
secondary-cooling the primarily cooled cold-rolled steel sheet to a temperature range of 450-550°C at an average cooling rate of 5°C/s or more and 20°C/s or lower, secondary-holding the steel sheet in the above-mentioned temperature range for 50 seconds or more and cooling the steel sheet to room temperature.

### Advantageous Effects of Invention

According to an aspect of the present disclosure, a cold rolled steel sheet or an alloy-plated steel sheet having excellent balance of ductility, formability and yield ratio without including unrecrystallized ferrite of a steel sheet, or a method for manufacturing the same may be effectively provided.

### Best Mode for Invention

Hereinafter, the present disclosure will be described.

The present inventors confirmed that, in order to make a steel sheet having excellent formability and high yield ratio, the optimal microstructure fraction, the addition of components to implement the fraction, and the optimal manufacturing process may be necessary.

Particularly, in order to improve the YR, TS²×√EL, and TS²×√HER of a steel sheet, optimization of the ferrite fraction may be important. Specifically, when the recrystallized ferrite fraction does not satisfy 85-99%, YR of 0.7-0.85, TS2×√EL of 0.7×10⁶-1.7×10⁶ (MPa)2%0.5, or TS²×√HER of 1.4×106-3×106 (MPa)2%0.5 may not be obtained, and the present disclosure was suggested.

The steel sheet having excellent balance of ductility, formability and yield ratio of the present disclosure may include, by weight%, C: 0.03-0.18%, Si: 0-0.70%, Mn: 0.25-1.80%, Al: 0-0.70%, P: 0.050% or less, S: 0.0300% or less, N: 0.0300% or less, Ti: 0-0.08%, Nb: 0-0.06%, V: 0-0.07%, Ti+Nb+V: 0.03-0.10%, Cr: 0-0.80%, Mo: 0-0.80%, Cu: 0-0.80%, Ni: 0-0.80%, B: 0-0.0050%, Ca: 0-0.050%, REM excluding Y: 0-0.050%, Mg: 0-0.050%, W: 0-0.50%, Zr: 0-0.50%, Sb: 0-0.50%, Sn: 0-0.50%, Y: 0-0.20%, Hf: 0-0.20%, and a balance of Fe and inevitable impurities, and may have a steel sheet microstructure including, by area%, pearlite containing cementite: 1-15%, and a balance of ferrite and inevitable structures, and a yield ratio (YR) of the steel sheet is 0.70-0.85, and a product of a square of tensile strength of the steel sheet and a square root of an elongation (TS²×√EL) satisfies 0.7×10⁶-1.7×10⁶ (MPa)²%^{0.5}, and a product of a square of tensile strength of the steel sheet and a square root of hole expandability (TS²×√HER) satisfies 1.4×10⁶-3.0×10⁶ (MPa) ²%^{0.5}.

In the description below, the composition of the steel sheet provided in the present disclosure may be described in detail. In this case, unless otherwise indicated, the content of each component may indicate weight%.

### C: 0.03-0.18%

Carbon (C) may be an indispensable element for providing strength to a steel sheet by forming precipitates together with Ti, Nb or V in the ferrite phase. When the added amount is less than 0.03%, it may be difficult to ensure a tensile strength of 410 MPa or more. When the content exceeds 0.18%, it may be difficult to ensure weld strength of the welded zone. Accordingly, in the present disclosure, it may be preferable to control the content of the C in the range of 0.03-0.18%. More preferably, the C content may be controlled in the range of 0.04-0.17%.

### Si: 0-0.70%

Silicon (Si) may have the effect of improving strength by solid solution strengthening, and may strengthen ferrite, may homogenize the structure, and may improve workability. Silicon (Si) may also be necessary for deoxidation during steelmaking. When the added amount exceeds 0.70%, it may cause plating defects such as underplating in the plating process and may degrade weldability of the steel sheet. Accordingly, in the present disclosure, it may be preferable to control the content of the Si in the range of 0-0.70%, and more preferably, in the range of 0-0.50%.

### Mn: 0.25-1.80%

Manganese (Mn) may be a useful for increasing both strength and ductility. When the added amount is 0.25% or more, manganese (Mn) may exhibit the effect, and when exceeding 1.80%, the low-temperature transformation phase of austenite to martensite or bainite may be facilitated, the yield ratio of the steel sheet may be lowered. Accordingly, in the present disclosure, it may be preferable to control the content of the Mn in the range of 0.25-1.80%. More preferably, the Mn content may be controlled to the range of 0.27-1.78%.

### Al: 0-0.70%

Aluminum (Al) may combine with oxygen in steel and may perform a deoxidizing effect. Aluminum (Al) may also strengthen ferrite, may uniformize the structure, and may improve workability, similarly to Si. When the added amount exceeds 0.70%, plating defects such as underplating in the plating process may occur and weldability of the steel sheet may be deteriorated. Accordingly, in the present disclosure, it may be preferable to control the Al content to a range of 0-0.70%, and more preferably, it may be controlled to a range of 0-0.50%.

### P: 0.050% or less

P may be contained as impurities and may deteriorate impact toughness. Accordingly, in the present disclosure, it may be preferable to control the P content to 0.050% or less. The P content may be more preferable to be limited to 0.020% or less, or even more preferably 0.015% or less.

### S: 0.0300% or less

S may be contained as impurities and may form MnS in the steel sheet and may deteriorate ductility. Accordingly, in the present disclosure, it may be preferable to control the S content to 0.0300 weight% or less. The S content may be more preferable to be limited to 0.0100% or less, or even more preferably 0.0050% or less.

### N: 0.0300% or less

N may be contained as impurities and may form nitride during continuous casting and may cause cracks in the slab. Accordingly, in the present disclosure, it may be preferable to control the N content to 0.0300 weight% or less. It may be more preferable to limit the N content to 0.0100% or less, even more preferably 0.0050% or less.

### Ti: 0-0.08%, Nb: 0-0.06%, V: 0-0.07%

### Ti+Nb+V: 0.03-0.10%

Ti, Nb, and V may be important elements forming precipitates in the steel sheet, and may be added to also improve strength and impact toughness of the steel sheet. In the present disclosure, it may be preferable to control the content of these elements to the ranges of Ti: 0-0.08%, Nb: 0-0.06% and V: 0-0.07%, respectively. When Ti, Nb, and V exceed upper limits thereof, excessive precipitate may be formed, and unrecrystallized ferrite may be generated, which may cause excessive characteristic effects and may also increase manufacturing costs.

Preferably, in the present disclosure, the content of the sum of one or more of the Ti, Nb, and V (Ti+Nb+V) may be controlled to the range of 0.03-0.10%. When the Ti+Nb+V content is less than 0.03%, it may be difficult to expect the effects by the addition of the component elements, and when exceeding 0.10%, excessive precipitate may be formed such that unrecrystallized ferrite may be generated, which may cause the excessive characteristic effect and may also increase manufacturing costs.

### Cr: 0-0.80% and Mo: 0-0.80%

Cr and Mo may be optional components in the present disclosure, and may suppress austenite decomposition during alloying treatment and may stabilize austenite, similarly to Mn. When the content of each of Cr and Mo exceeds 0.80%, the low-temperature transformation phase of martensite or bainite may be facilitated, the yield ratio of the steel sheet may be lowered. Accordingly, it may be preferable to control the content of each of the Cr and Mo to 0.80% or less, and more preferably, 0.50% or less.

### Cu: 0-0.80%, Ni: 0-0.80%

Cu and Ni may be optional components in the present disclosure and may stabilize austenite and suppress corrosion. Also, Cu and Ni may be concentrated on the surface of the steel sheet and may prevent hydrogen penetration into the steel sheet, thereby suppressing hydrogen-delayed fracture. In the present disclosure, when the content of each of Cu and Ni exceeds 0.80%, characteristic effects may be excessive and also manufacturing costs may increase. Accordingly, in the present disclosure, it may be preferable to control the content of each of Cu and Ni to 0.80% or less, and more preferably, it may be controlled to 0.50% or less.

### B: 0-0.0050%

B may be an optional component in the present disclosure, and may improve quenching ability such that strength may increase, and B may suppress nucleation at grain boundaries. When the content of B exceeds 0.0050%, characteristic effects may be excessive and also manufacturing costs may increase. Accordingly, in the present disclosure, it may be preferable to control the content of the B to 0.0050% or less.

### Ca: 0-0.050%, Mg: 0-0.050% and REM excluding Y: 0-0.050%

REM may refer to a total of 17 elements of Sc, Y and lanthanoids. REM excluding Ca, Mg, and Y may improve ductility of a steel sheet by spheroidizing sulfide as optional components in the present disclosure. When the content of each REM excluding Ca, Mg, and Y exceeds 0.050%, characteristic effects may be excessive and also, manufacturing costs may increase. Accordingly, in the present disclosure, it may be preferable to control the content of each REM excluding Ca, Mg, and Y to 0.050% or less, and more preferably, to 0.010% or less.

### W: 0-0.50%, Zr: 0-0.50%

W and Zr may be optional components in the present disclosure, and may improve quenching ability and may thus increase strength of the steel sheet. When the content of each of W and Zr exceeds 0.50%, characteristic effects may be excessive and also manufacturing costs may increase. Accordingly, in the present disclosure, it may be preferable to control the content of each of W and Zr to 0.50% or less, and more preferably, to 0.20% or less.

### Sb: 0-0.50%, Sn: 0-0.50%

Sb and Sn may be optional components in the present disclosure, and may improve plating wettability and plating adhesion of the steel sheet. When the content of each of Sb and Sn exceeds 0.50%, brittleness of the steel sheet may increase, such that cracks may be created during hot working or cold working. Accordingly, in the present disclosure, it may be preferable to control the content of one or more of Sb and Sn to 0.50 weight% or less, and more preferably, to 0.20% or less.

### Y: 0-0.20%, Hf: 0-0.20%

Y and Hf may be optional components in the present disclosure, and may improve corrosion resistance of the steel sheet. When the content of each of Y and Hf exceeds 0.20%, ductility of the steel sheet may be deteriorated. Accordingly, in the present disclosure, it may be preferable to control the content of each of Y and Hf to 0.20% or less, and more preferably, to 0.10% or less.

A remainder of the present disclosure other than the above composition may include a balance of Fe and inevitable impurities preferably, and the steel in present disclosure may not exclude addition of other compositions. In a general manufacturing process, inevitable impurities may be inevitably added from raw materials or an ambient environment, and thus, impurities may not be excluded. A person skilled in the art of a general manufacturing process may be aware of the impurities, and thus, the descriptions of the impurities may not be provided in the present disclosure.

Also, in the present disclosure, the steel sheet may have a steel sheet microstructure including, by area%, pearlite containing cementite: 1-15%, and a balance of ferrite and inevitable structures. When the pearlite fraction is less than 1% or exceeds 15%, the yield ratio, elongation, or hole expansion ratio of the steel sheet may be degraded, which may not satisfy YR 0.70-0.85, TS²×√EL 0.7×10⁶-1.7×10⁶ (MPa)²%^{0.5}, or TS²×√HER 1.4×10⁶-3.0×10⁶ (MPa)²%^{0.5} of the steel sheet described later, which may not be preferable.

More preferably, the steel sheet may have a steel sheet microstructure including, by area%, pearlite containing cementite: 3-13%, and a balance of ferrite and inevitable structures.

The steel sheet of the present disclosure having the fraction of the microstructure, the steel sheet having tensile strength 410MPa or more (preferably 410-580MPa), may have a yield ratio (YR) of 0.70-0.85, and the product of the square of the tensile strength and the square root of the elongation (TS²×√EL) is 0.7×10⁶-1.7×10⁶ (MPa)²%^{0.5}, and the product of the square of tensile strength and the square root of hole expandability (TS²×√HER) may satisfy 1.4×10⁶-3×10⁶ (MPa)²%^{0.5}.

More preferably, the yield ratio (YR=YS/TS) may be controlled to 0.71-0.84.

Also, it may be more preferable that the product of the square of the tensile strength of the steel sheet and the square root of the elongation (TS²×√EL) may satisfy 0.71×10⁶-1.69×10⁶ (MPa)²%^{0.5}.

Also, it may be more preferable that the product of the square of the tensile strength of the steel sheet and the square root of the hole expandability (TS²×√HER) satisfies 1.43×10⁶-2.93×10⁶ (MPa)²%^{0.5}.

Thereafter, the method of manufacturing a steel sheet according to another embodiment of the present disclosure may be described in detail.

The method of manufacturing a steel sheet of the present disclosure may include heating a steel ingot or slab having the above-described composition at a temperature of 1000-1350°C; manufacturing a hot-rolled steel sheet by hot-rolling a heated ingot or slab at a finish rolling temperature of 800-1000°C; cooling the manufactured hot-rolled steel sheet, and coiling the steel sheet in a temperature range of 300-600°C; heat-treating the coiled hot-rolled steel sheet in a temperature range of 650-800°C for 600-1700 seconds, and cold-rolling the steel sheet at a reduction ratio of 30-90%; heating the rolled cold-rolled steel sheet in a temperature range of 740-860°C and primary-holding the steel sheet for 50 seconds or more; primary-cooling the primarily held cold-rolled steel sheet to a temperature range of 600-760°C at an average cooling rate of 5°C/s or lower; and secondary-cooling the primarily cooled cold-rolled steel sheet to a temperature range of 450-550°C at an average cooling rate of more than 5°C/s and 20°C/s or lower, secondary-holding the steel sheet in the above-mentioned temperature range for 50 seconds or more and cooling to room temperature.

### Heating

In the present disclosure, first, the ingot or slab having the above-described composition may be heated in a temperature range of 1000-1350°C.

In the present disclosure, the ingot or slab is not particularly limited to the process for manufacturing the ingot or slab, and it may be preferable to limit the heating temperature to a range of 1000-1350°C. When the heating temperature is less than 1000°C, hot-rolling may occur below the finishing rolling temperature range, and when the heating temperature exceeds 1350°C, the steel may reach a melting point and may melt.

### Finish hot-rolling

Thereafter, in the present disclosure, the hot-rolled steel sheet may be manufactured by hot-rolling the heated ingot or slab at a finishing rolling temperature of 800-1000°C.

When the finish rolling temperature is lower than 800°C, high strength of the steel may cause a large burden on the hot-rolling machine. When the finish temperature exceeds 1000°C, grains of the steel sheet after hot-rolling may be coarse, which may deteriorate the properties of the steel sheet.

Preferably, the finish hot-rolling may be performed in a temperature range of 830-950°C.

### Coiling after cooling

In the present disclosure, the manufactured hot-rolled steel sheet may be cooled and may be coiled in a temperature range of 300-600°C.

After the finish hot-rolling, the hot-rolled steel sheet may be cooled to refine the grain of the hot-rolled steel sheet. In this case, it may be preferable to determine the average cooling rate to 10°C/s or more.

Also, since it may not be easy to coil or pickle the hot-rolled steel sheet in which the main phase is a low-temperature transformation phase of martensite or bainite or in which scale is formed in the steel sheet, it may be preferable to determine the coiling temperature of the hot-rolled steel sheet to 300-600°C.

When the coiling temperature is less than 300°C, it may not be easy to coil the hot-rolled steel sheet because the main phase includes a low-temperature transformation phase having high strength. When the coiling temperature exceeds 600°C, the scale formed on the surface of the hot-rolled steel sheet may be formed deeply in the hot-rolled steel sheet, such that it may be difficult to perform pickling.

Preferably, the coiling may be performed in the temperature range of 350-550°C.

### Precipitate formation annealing heat-treatment and cold-rolling

Thereafter, in the present disclosure, the coiled hot-rolled steel sheet may be heat-treated in the temperature range of 650-800°C for 600-1700 seconds, and may be cold-rolled with a reduction ratio of 30-90%.

The present inventors confirmed that optimization of precipitate of the hot-rolled steel sheet became easier when the hot-rolled steel sheet was annealed in the temperature range of 650-800°C for a short period of time. This may be because Ti, Nb or V not precipitated during the coiling of the hot-rolling process was re-precipitated in the hot-rolled steel sheet during the annealing heat-treatment at an appropriate temperature and time, thereby contributing to optimization of the precipitate of the steel sheet. That is, in the present disclosure, it may be necessary to annealing heat-treatment the hot-rolled steel sheet at an appropriate high temperature for a short period of time. This may be because the annealing heat-treatment at an appropriate temperature and time may facilitate formation of precipitates in the hot-rolled steel sheet, which may improve the yield ratio of the final product.

Accordingly, in the present disclosure, the annealing heat-treatment of the hot-rolled steel sheet may include heat-treating in a temperature range of 650-800°C for 600-1700 seconds. When the heat treatment conditions are less than 650°C or less than 600 seconds, it may not be easy to optimize the precipitate of the annealed heat-treated steel sheet. When the heat treatment condition exceeds 800°C or 1700 seconds, the precipitation of the annealed heat-treated steel sheet may not be easy. Accordingly, the desired final steel sheet yield ratio may not be obtained, which may be problematic.

Preferably, the annealing heat-treatment may be performed in the temperature range of 680-750°C.

Thereafter, in the present disclosure, a general pickling treatment may be performed on the annealed heat-treated hot-rolled steel sheet. The pickled hot-rolled steel sheet may preferably be cold-rolled at a cumulative reduction ratio of 30-90%. When the cold-rolling cumulative reduction ratio exceeds 90%, it may be difficult to perform cold-rolling in a short period of time due to high strength of the steel sheet.

The cold-rolled steel sheet according to the present disclosure may go through an annealing process and may be manufactured into an un-plated cold-rolled steel sheet, or may go through a plating process and may be manufactured into a plated steel sheet in order to provide corrosion resistance. As the plating, a plating method such as hot-dip galvanizing, electrogalvanizing, or hot-dip aluminum plating may be applied.

### Primary-holding

In the present disclosure, the rolled cold-rolled steel sheet may be heated in a temperature range of 740-860°C and may primarily held for 50 seconds or more.

When the primary-holding temperature is less than 740°C, unrecrystallized ferrite may be generated, which may deteriorate YR, TS²×√EL, and TS²×√HER of the steel sheet. Also, when the primary-holding temperature is greater than 860°C, the pearlite fraction including cementite may exceed 15%, which may deteriorate YR, TS²×√EL, and TS²×√HER of the steel sheet.

Also, when the primary-holding time is less than 50 seconds, the heat treatment time may be insufficient, which may deteriorate YR, TS²×√EL, and TS²×√HER of the steel sheet.

### Primary-cooling

The primarily held cold-rolled steel sheet may be primarily cooled to a temperature range of 600-760°C at an average cooling rate of 5°C/s or lower.

When the cooling stop temperature is less than 600°C, the cooling stop temperature may be low, which may reduce TS²×√EL and TS²×√HER. Also, when the cooling stop temperature exceeds 760°C, the cooling stop temperature may be high, which may reduce TS²×√EL, and TS²×√HER.

Also, when the primary-cooling rate exceeds 5°C/s, there may be problems in equipment specification.

### Secondary-cooling and secondary-holding

Thereafter, in the present disclosure, the primarily cooled cold-rolled steel sheet may be secondarily cooled to a temperature range of 450-550°C at an average cooling rate of more than 5°C/s and 20°C/s or lower, may be secondarily held in this temperature range for more than 50 seconds and may be cooled to room temperature.

When the average secondary-cooling rate is 5°C/s or lower, the pearlite fraction including cementite may exceed 15%, which may lower TS²×√EL, and TS²×√HER, and when the average secondary-cooling rate exceeds 20°C/s, there may be problems in equipment specification.

Also, when the secondary-holding temperature is less than 450°C, TS²×√EL, and TS²×√HER of the steel sheet may be reduced by the low heat treatment temperature. Also, when the secondary-holding temperature exceeds 550°C, YR, TS²×√EL, and TS²×√HER of the steel sheet may be reduced.

Also, when the secondary-holding time is less than 50 seconds, TS²×√EL, and TS²×√HER of the steel sheet may be reduced due to insufficient heat treatment time.

As described above, by cooling the secondarily held steel sheet to room temperature, a steel sheet having excellent balance of YR, TS²×√EL, TS²×√HER may be effectively manufactured.

### Mode for Invention

Hereinafter, the present disclosure may be described more specifically through examples. However, it should be noted that the examples as below are only intended to describe the present disclosure in greater detail, and are not intended to limit the scope of the rights of the present disclosure. It may be noted that the scope of the rights of the present disclosure is determined by the subject matters described in the claims and reasonably inferred therefrom.

### (Example)

A slab having a thickness of 100 mm and satisfying the composition system listed in Table 1 below was manufactured, and the slab was heated at 1200°C, and hot-rolled at a finish rolling temperature of 900°C, thereby manufacturing a hot-rolled steel sheet having a thickness of 3 mm. Thereafter, the hot-rolled steel sheet was cooled at an average cooling rate of 30°C/s and coiled at the hot-rolled steel sheet coiling temperature listed in Table 2 below. Thereafter, as listed in Table 2 below, the coiled hot-rolled steel sheet was heated to the hot-rolled steel sheet annealing temperature, held for a predetermined period of annealing time, and cooled to room temperature. Scales of the surface of the annealing heat-treated steel sheet was removed through pickling, and cold-rolling was performed to a thickness of 1.5 mm. The cold-rolled steel sheet was heated to the primary-holding temperature listed in Table 2 below and held at the primary-holding temperature for a primary-holding time period. The primarily held cold-rolled steel sheet was cooled to the primary-cooling stop temperature listed in Table 3 below at the average primary-cooling rate. Thereafter, the primarily cooled cold-rolled steel sheet was cooled to the secondary-holding temperature at the average secondary-cooling rate listed in Table 3 below, held for the secondary-holding time period, and cooled to room temperature at the average tertiary-cooling rate listed in Table 3 below.

The microstructure of each steel sheet manufactured as described above was measured and listed in Table 4 below. Among the microstructures of the steel sheet, recrystallized ferrite, non-recrystallized ferrite, cementite, and low-temperature transformation structure (bainite, martensite) were observed through SEM after etching the cross-section of the polished sample with nital. After nital etching, the structure without unevenness on the sample surface was determined to be ferrite, and the structure with a spherical or lamellar structure was determined to be cementite. Non-recrystallized ferrite containing a lot of dislocations may have crystal orientation differences within the particles. Accordingly, the crystal orientation of ferrite was measured using FESEM-EBSD, and non-recrystallized ferrite in ferrite was distinguished using the KAM (Kernel Average Misorientation) method.

Also, the mechanical properties of each manufactured product were measured and listed in Table 5 below. The properties of the steel sheet were evaluated by a tensile test and a hole expansion test. The tensile test was conducted with a test piece collected in accordance with the JIS 5 standard in the 0° direction with respect to the rolling direction of the rolled plate, and YR, TS²×√EL were determined. The hole expansion test was conducted by pressing and expanding a 60° cone punch with a 10 mmØ punching hole (die inner diameter 10.3 mm, clearance 12.5%) at 20 mm/min in the direction in which the burr of the punching hole becomes the outer side.
Hole expansion ratio: HER(%) = {(D - D₀)/D₀} × 100
D: Hole diameter when the crack penetrated the plate thickness (mm)
D₀: Initial hole diameter (mm)

**[Table 1]**

| St ee l ty pe | Chemical composition (weight%) | | | | | | | | | | |
|---|---|---|---|---|---|---|---|---|---|---|---|
| | C | Si | Mn | P | S | Al | N | Ti | Nb | V | Others |
| A | 0.09 | 0.35 | 1.24 | 0.008 | 0.0009 | 0.14 | 0.0022 | 0.06 | 0.02 | 0 | |
| B | 0.11 | 0.28 | 1.21 | 0.011 | 0.0012 | 0.18 | 0.0025 | 0.01 | 0.06 | 0.01 | |
| C | 0.12 | 0.26 | 1.15 | 0.009 | 0.0007 | 0.19 | 0.0024 | 0.01 | 0.01 | 0.07 | |
| D | 0.08 | 0.29 | 1.29 | 0.010 | 0.0011 | 0.21 | 0.0031 | 0.08 | 0 | 0.01 | |
| E | 0.13 | 0.33 | 1.21 | 0.008 | 0.0010 | 0.24 | 0.0028 | 0.04 | 0.04 | 0.01 | Cr: 0.45 |
| F | 0.07 | 0.38 | 1.17 | 0.009 | 0.0011 | 0.26 | 0.0032 | 0.08 | 0.01 | 0.01 | Mo: 0.40 |
| G | 0.13 | 0.34 | 1.23 | 0.010 | 0.0011 | 0.22 | 0.0028 | 0 | 0.05 | 0.04 | Ni: 0.38 |
| H | 0.14 | 0.22 | 1.14 | 0.012 | 0.0008 | 0.13 | 0.0031 | 0.07 | 0.01 | 0.01 | Cu: 0.47 |
| I | 0.10 | 0.29 | 1.15 | 0.007 | 0.0010 | 0.25 | 0.0035 | 0.03 | 0 | 0 | B: 0.0022 |
| J | 0.12 | 0.27 | 1.22 | 0.008 | 0.0012 | 0.18 | 0.0025 | 0.05 | 0.02 | 0.01 | Ca: 0.003 |
| K | 0.09 | 0.31 | 1.21 | 0.010 | 0.0010 | 0.29 | 0.0027 | 0.04 | 0.02 | 0.02 | REM: 0.001 |
| L | 0.11 | 0.36 | 1.15 | 0.008 | 0.0010 | 0.23 | 0.0024 | 0.01 | 0.06 | 0.01 | Mg: 0.003 |
| M | 0.12 | 0.33 | 1. 33 | 0.009 | 0.0013 | 0.30 | 0.0033 | 0.03 | 0.05 | 0 | W: 0.12 |
| N | 0.04 | 0.31 | 1.78 | 0.012 | 0.0009 | 0.22 | 0.0028 | 0.04 | 0.03 | 0.02 | Zr: 0.15 |
| O | 0.17 | 0.38 | 0.27 | 0.011 | 0.0008 | 0.30 | 0.0030 | 0.02 | 0.05 | 0.02 | Sb: 0.13 |
| P | 0.14 | 0.27 | 1. 18 | 0.010 | 0.0009 | 0.24 | 0.0032 | 0.02 | 0.01 | 0.06 | Sn: 0.09 |
| Q | 0.03 | 0.70 | 1.24 | 0.012 | 0.0011 | 0.69 | 0.0025 | 0.01 | 0.01 | 0.07 | Y: 0.02 |
| R | 0.18 | 0.01 | 1.23 | 0.011 | 0.0012 | 0.02 | 0.0028 | 0.01 | 0.05 | 0.02 | Hf: 0.03 |
| XA | 0.01 | 0.36 | 1. 18 | 0.010 | 0.0008 | 0.30 | 0.0026 | 0.07 | 0.01 | 0.01 | |
| XB | 0.20 | 0.29 | 1. 19 | 0.007 | 0.0010 | 0.23 | 0.0030 | 0.06 | 0.01 | 0.02 | |
| XC | 0.11 | 0.72 | 1.22 | 0.011 | 0.0012 | 0.28 | 0.0033 | 0.05 | 0.02 | 0.01 | |
| XD | 0.12 | 0.42 | 0.23 | 0.011 | 0.0009 | 0.22 | 0.0025 | 0.06 | 0.02 | 0 | |
| XE | 0.10 | 0.41 | 1.82 | 0.009 | 0.0009 | 0.24 | 0.0035 | 0.02 | 0.05 | 0.02 | |
| XF | 0.08 | 0.37 | 1.13 | 0.008 | 0.0010 | 0.72 | 0.0028 | 0.01 | 0.06 | 0 | |
| XG | 0.09 | 0.35 | 1.20 | 0.010 | 0.0008 | 0.18 | 0.0030 | 0.12 | 0.01 | 0.01 | |
| XH | 0.11 | 0.36 | 1.24 | 0.012 | 0.0009 | 0.23 | 0.0024 | 0.02 | 0.12 | 0.02 | |
| XI | 0.09 | 0.33 | 1.16 | 0.009 | 0.0011 | 0.21 | 0.0032 | 0.01 | 0.01 | 0.13 | |
| XJ | 0.12 | 0.34 | 1.17 | 0.010 | 0.0008 | 0.19 | 0.0028 | 0.04 | 0.04 | 0.04 | |

| | | | | | | | | | | | |
|---|---|---|---|---|---|---|---|---|---|---|---|
| **[163]** *In Table 1, the remainder components are Fe and inevitable impurities. | | | | | | | | | | | |

**[Table 2]**

| Cla ssi fic ati on | No. | Stee l type | Hot-rolled steel sheet coiling temperatur e (°C) | Hot-rolled steel sheet annealing temperatur e (°C) | Hot-rolled steel sheet Annealing time (s) | Average primary-heating rate (°C/s) | Primary-holding temperatur e range | Primar y-holdin g time (s) |
|---|---|---|---|---|---|---|---|---|
| IE | 1 | A | 500 | 700 | 1100 | 10 | 780 | 120 |
| CE | 2 | A | 500 | 820 | 1200 | 10 | 780 | 120 |
| CE | 3 | A | 550 | 630 | 1100 | 10 | 820 | 120 |
| CE | 4 | A | 550 | 700 | 1800 | 10 | 820 | 120 |
| CE | 5 | A | 500 | 700 | 500 | 10 | 780 | 100 |
| CE | 6 | A | 400 | 750 | 1300 | 10 | 880 | 120 |
| CE | 7 | A | 450 | 750 | 1000 | 10 | 720 | 120 |
| CE | 8 | A | 450 | 750 | 1100 | 10 | 800 | 30 |
| CE | 9 | A | 500 | 700 | 900 | 10 | 830 | 120 |
| CE | 10 | A | 550 | 700 | 1300 | 10 | 780 | 120 |
| CE | 11 | A | 500 | 700 | 1600 | 10 | 800 | 120 |
| CE | 12 | A | 550 | 700 | 700 | 10 | 780 | 120 |
| CE | 13 | A | 500 | 750 | 1100 | 10 | 780 | 120 |
| CE | 14 | A | 450 | 700 | 1300 | 10 | 800 | 100 |
| IE | 15 | B | 500 | 750 | 1100 | 10 | 780 | 120 |
| IE | 16 | C | 400 | 700 | 1000 | 10 | 780 | 120 |
| IE | 17 | D | 550 | 700 | 900 | 10 | 760 | 90 |
| IE | 18 | E | 400 | 780 | 1200 | 10 | 840 | 90 |
| IE | 19 | F | 350 | 800 | 1100 | 10 | 780 | 100 |
| IE | 20 | G | 400 | 650 | 1200 | 10 | 860 | 120 |
| IE | 21 | H | 500 | 670 | 1000 | 10 | 740 | 120 |
| IE | 22 | I | 500 | 750 | 1400 | 10 | 780 | 100 |
| IE | 23 | J | 500 | 700 | 1200 | 10 | 800 | 100 |
| IE | 24 | K | 450 | 700 | 1200 | 10 | 820 | 120 |
| IE | 25 | L | 500 | 700 | 1100 | 10 | 800 | 120 |
| IE | 26 | M | 500 | 700 | 1000 | 10 | 800 | 100 |
| IE | 27 | N | 450 | 750 | 1000 | 10 | 780 | 90 |
| IE | 28 | O | 500 | 750 | 900 | 10 | 820 | 100 |
| IE | 29 | P | 550 | 700 | 1200 | 10 | 780 | 120 |
| IE | 30 | Q | 550 | 750 | 1300 | 10 | 780 | 90 |
| IE | 31 | R | 450 | 750 | 1200 | 10 | 800 | 100 |
| CE | 32 | XA | 500 | 750 | 1200 | 10 | 800 | 90 |
| CE | 33 | XB | 550 | 750 | 1000 | 10 | 780 | 120 |
| CE | 34 | XC | 550 | 750 | 1100 | 10 | 820 | 120 |
| CE | 35 | XD | 550 | 700 | 1300 | 10 | 800 | 90 |
| CE | 36 | XE | 450 | 750 | 1200 | 10 | 780 | 120 |
| CE | 37 | XF | 450 | 750 | 900 | 10 | 780 | 100 |
| CE | 38 | XG | 500 | 700 | 1200 | 10 | 800 | 120 |
| CE | 39 | XH | 500 | 750 | 1300 | 10 | 780 | 100 |
| CE | 40 | XI | 550 | 700 | 1000 | 10 | 800 | 120 |
| CE | 41 | XJ | 550 | 750 | 1100 | 10 | 800 | 120 |
| IE: Inventive Example, CE: Comparative Example | | | | | | | | |

**[Table 3]**

| Cla ssi fic ati on | No. | Stee l type | Average primary-cooling rate (°C/s) | primary-cooling stop temperatur e (°C) | Average secondary-cooling rate (°C/s) | Secondary-holding temperatur e (°C) | Secondary-holding time (s) | Averag e tertia ry-coolin g rate (°C/s) |
|---|---|---|---|---|---|---|---|---|
| IE | 1 | A | 3 | 700 | 10 | 500 | 200 | 10 |
| CE | 2 | A | 3 | 700 | 10 | 500 | 200 | 10 |
| CE | 3 | A | 3 | 700 | 10 | 500 | 200 | 10 |
| CE | 4 | A | 3 | 650 | 10 | 500 | 150 | 10 |
| CE | 5 | A | 3 | 650 | 10 | 500 | 150 | 10 |
| CE | 6 | A | 3 | 700 | 10 | 500 | 200 | 10 |
| CE | 7 | A | 3 | 700 | 10 | 500 | 200 | 10 |
| CE | 8 | A | 3 | 650 | 10 | 500 | 150 | 10 |
| CE | 9 | A | 3 | 780 | 10 | 500 | 200 | 10 |
| CE | 10 | A | 3 | 580 | 10 | 500 | 200 | 10 |
| CE | 11 | A | 3 | 650 | 0.5 | 500 | 150 | 10 |
| CE | 12 | A | 3 | 700 | 10 | 570 | 200 | 10 |
| CE | 13 | A | 3 | 700 | 10 | 430 | 150 | 10 |
| CE | 14 | A | 3 | 650 | 10 | 500 | 30 | 10 |
| IE | 15 | B | 3 | 700 | 10 | 500 | 200 | 10 |
| IE | 16 | C | 3 | 700 | 10 | 500 | 200 | 10 |
| IE | 17 | D | 3 | 650 | 10 | 500 | 100 | 10 |
| IE | 18 | E | 3 | 700 | 10 | 500 | 150 | 10 |
| IE | 19 | F | 3 | 700 | 10 | 500 | 200 | 10 |
| IE | 20 | G | 3 | 700 | 10 | 500 | 150 | 10 |
| IE | 21 | H | 3 | 650 | 10 | 500 | 200 | 10 |
| IE | 22 | I | 3 | 700 | 10 | 500 | 200 | 10 |
| IE | 23 | J | 3 | 610 | 10 | 500 | 200 | 10 |
| IE | 24 | K | 3 | 750 | 10 | 500 | 100 | 10 |
| IE | 25 | L | 3 | 700 | 10 | 500 | 200 | 10 |
| IE | 26 | M | 3 | 650 | 10 | 500 | 200 | 10 |
| IE | 27 | N | 3 | 650 | 10 | 500 | 150 | 10 |
| IE | 28 | O | 3 | 700 | 10 | 550 | 200 | 10 |
| IE | 29 | P | 3 | 650 | 10 | 450 | 100 | 10 |
| IE | 30 | Q | 3 | 700 | 10 | 500 | 150 | 10 |
| IE | 31 | R | 3 | 650 | 10 | 500 | 200 | 10 |
| CE | 32 | XA | 3 | 700 | 10 | 500 | 200 | 10 |
| CE | 33 | XB | 3 | 650 | 10 | 500 | 200 | 10 |
| CE | 34 | XC | 3 | 700 | 10 | 500 | 150 | 10 |
| CE | 35 | XD | 3 | 700 | 10 | 500 | 200 | 10 |
| CE | 36 | XE | 3 | 650 | 10 | 500 | 150 | 10 |
| CE | 37 | XF | 3 | 650 | 10 | 500 | 150 | 10 |
| CE | 38 | XG | 3 | 700 | 10 | 500 | 200 | 10 |
| CE | 39 | XH | 3 | 650 | 10 | 500 | 200 | 10 |
| CE | 40 | XI | 3 | 700 | 10 | 500 | 200 | 10 |
| CE | 41 | XJ | 3 | 700 | 10 | 500 | 150 | 10 |
| IE: Inventive Example, CE: Comparative Example | | | | | | | | |

**[Table 4]**

| Classi ficati on | No. | Steel type | Ferrite (area%) | Uncrystallized ferrite (area%) | Pearlite (area%) |
|---|---|---|---|---|---|
| IE | 1 | A | 92 | 0 | 8 |
| CE | 2 | A | 93 | 0 | 7 |
| CE | 3 | A | 94 | 0 | 6 |
| CE | 4 | A | 95 | 0 | 5 |
| CE | 5 | A | 94 | 0 | 6 |
| CE | 6 | A | 83 | 0 | 17 |
| CE | 7 | A | 87 | 5 | 8 |
| CE | 8 | A | 88 | 3 | 9 |
| CE | 9 | A | 90 | 0 | 10 |
| CE | 10 | A | 93 | 0 | 7 |
| CE | 11 | A | 82 | 0 | 18 |
| CE | 12 | A | 91 | 0 | 9 |
| CE | 13 | A | 95 | 0 | 5 |
| CE | 14 | A | 90 | 0 | 10 |
| IE | 15 | B | 89 | 0 | 11 |
| IE | 16 | C | 87 | 0 | 13 |
| IE | 17 | D | 97 | 0 | 3 |
| IE | 18 | E | 90 | 0 | 10 |
| IE | 19 | F | 93 | 0 | 7 |
| IE | 20 | G | 92 | 0 | 8 |
| IE | 21 | H | 91 | 0 | 9 |
| IE | 22 | I | 93 | 0 | 7 |
| IE | 23 | J | 89 | 0 | 11 |
| IE | 24 | K | 90 | 0 | 10 |
| IE | 25 | L | 93 | 0 | 7 |
| IE | 26 | M | 88 | 0 | 12 |
| IE | 27 | N | 92 | 0 | 8 |
| IE | 28 | O | 91 | 0 | 9 |
| IE | 29 | P | 89 | 0 | 11 |
| IE | 30 | Q | 90 | 0 | 10 |
| IE | 31 | R | 93 | 0 | 7 |
| CE | 32 | XA | 96 | 0 | 6 |
| CE | 33 | XB | 90 | 2 | 8 |
| CE | 34 | XC | 89 | 0 | 11 |
| CE | 35 | XD | 91 | 0 | 9 |
| CE | 36 | XE | 90 | 3 | 7 |
| CE | 37 | XF | 92 | 0 | 8 |
| CE | 38 | XG | 90 | 2 | 8 |
| CE | 39 | XH | 89 | 3 | 9 |
| CE | 40 | XI | 90 | 3 | 7 |
| CE | 41 | XJ | 88 | 2 | 10 |
| IE: Inventive Example, CE: Comparative Example | | | | | |

**[Table 5]**

| Classi ficati on | No. | Steel type | YR | TS²×√EL (MPa²%^{0.5}) | TS²×√HER (MPa²%^{0.5}) |
|---|---|---|---|---|---|
| IE | 1 | A | 0.78 | 1,264,485 | 2,314,207 |
| CE | 2 | A | 0.75 | 589,358 | 1,290,614 |
| CE | 3 | A | 0.84 | 622,004 | 1,315,082 |
| CE | 4 | A | 0.80 | 568,391 | 1,194,634 |
| CE | 5 | A | 0.74 | 576,586 | 1,229,579 |
| CE | 6 | A | 0.68 | 608,379 | 1,049,561 |
| CE | 7 | A | 0.88 | 1,827,064 | 3,245,698 |
| CE | 8 | A | 0.89 | 1,758,105 | 3,150,843 |
| CE | 9 | A | 0.79 | 641,927 | 1,251,692 |
| CE | 10 | A | 0.78 | 672,351 | 1,108,067 |
| CE | 11 | A | 0.80 | 569, 872 | 1,353,294 |
| CE | 12 | A | 0.67 | 638, 807 | 1,220,521 |
| CE | 13 | A | 0.81 | 584,205 | 1,295,304 |
| CE | 14 | A | 0.77 | 489,273 | 1,128,621 |
| IE | 15 | B | 0.79 | 1,167,204 | 2,433,850 |
| IE | 16 | C | 0.82 | 1,272,548 | 2,292,675 |
| IE | 17 | D | 0.80 | 1,581,961 | 2,385,024 |
| IE | 18 | E | 0.81 | 1,335,152 | 2,118,503 |
| IE | 19 | F | 0.75 | 738,907 | 1,434,027 |
| IE | 20 | G | 0.79 | 1,687,628 | 2,821,304 |
| IE | 21 | H | 0.84 | 1,690,349 | 2,934,571 |
| IE | 22 | I | 0.80 | 717,924 | 1,502,276 |
| IE | 23 | J | 0.78 | 859,480 | 1,648,538 |
| IE | 24 | K | 0.77 | 928,067 | 1,847,825 |
| IE | 25 | L | 0.77 | 1,045,443 | 2,004,698 |
| IE | 26 | M | 0.81 | 1,257,952 | 2,157,604 |
| IE | 27 | N | 0.80 | 1,300,831 | 2,438,591 |
| IE | 28 | O | 0.71 | 1,274,927 | 2,352,034 |
| IE | 29 | P | 0.75 | 1,076,751 | 2,620,057 |
| IE | 30 | Q | 0.80 | 1,320,127 | 2,205,145 |
| IE | 31 | R | 0.79 | 1,438,210 | 2,325,204 |
| CE | 32 | XA | 0.67 | 674,584 | 1,208,634 |
| CE | 33 | XB | 0.82 | 1,830,158 | 3,203,257 |
| CE | 34 | XC | 0.80 | 571,080 | 1,325,869 |
| CE | 35 | XD | 0.78 | 580, 539 | 1,059,567 |
| CE | 36 | XE | 0.81 | 1,752,664 | 3,314,006 |
| CE | 37 | XF | 0.77 | 602,578 | 1,190,485 |
| CE | 38 | XG | 0.88 | 1,820,312 | 3,134,527 |
| CE | 39 | XH | 0.87 | 1,932,855 | 3,304,851 |
| CE | 40 | XI | 0.90 | 1,783,967 | 3,227,465 |
| CE | 41 | XJ | 0.89 | 1,845,782 | 3,280,734 |
| IE: Inventive Example, CE: Comparative Example | | | | | |

As listed in Table 1-4, Inventive Example 1 and Inventive Example 15-31, which satisfied the alloy composition, manufacturing process, and microstructure conditions of the present disclosure, satisfied the yield ratio (YR) of the steel sheet of 0.7-0.85, the product of the square of the tensile strength and the square root of the elongation (TS²×√EL) 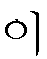 0.7×10⁶-1.7×10⁶ (MPa)²%^{0.5}, and the product of the square of the tensile strength and the square root of the hole expandability (TS²×√HER) 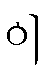 1.4×10⁶-3×10⁶ (MPa)²%^{0.5}, confirming that a steel sheet having excellent balance of ductility, formability, and yield ratio may be manufactured.

Comparative example 2 had a high hot-rolled steel sheet annealing temperature, such that precipitation of the steel sheet was not easy, and accordingly, TS²×√EL was less than 0.7×10⁶ (MPa)²%^{0.5}, and TS²×√HER was less than 1.4×10⁶ (MPa) ²%^{0.5}.

Comparative example 3 had a low hot-rolled steel sheet annealing temperature, such that precipitation optimization of the steel sheet was not easy, and accordingly, TS²×√EL was less than 0.7×10⁶ (MPa)²%^{0.5}, and TS²×√HER was less than 1.4×10⁶ (MPa)²%^{0.5}.

In comparative example 4, it was not easy to precipitate the steel sheet because the hot-rolled steel sheet annealing time was relatively long, and accordingly, TS²×√EL was less than 0.7×10⁶ (MPa)²%^{0.5}, and TS²×√HER was less than 1.4×10⁶ (MPa)²%^{0.5}.

In comparative example 5, it was not easy to optimize the precipitation of the steel sheet because the hot-rolled steel sheet annealing time was relatively short, and accordingly, TS²×√EL was less than 0.7×10⁶ (MPa)²%^{0.5}, and TS²×√HER was less than 1.4×10⁶ (MPa)²%^{0.5}.

In comparative example 6, a primary-holding temperature was high, such that the pearlite fraction including cementite in the steel sheet exceeded 15%, and accordingly, YR was less than 0.7, TS²×√EL was less than 0.7×10⁶ (MPa)²%^{0.5}, and TS²×√HER was less than 1.4×10⁶ (MPa) ²%^{0.5}.

In comparative example 7, a primary-holding temperature was low, such that unrecrystallized ferrite in the steel sheet was formed, and accordingly, YR was greater than 0.85, TS²×√EL was greater than 1.7×10⁶ (MPa)²%^{0.5}, and TS²×√HER was greater than 3.0×10⁶ (MPa)²%^{0.5}.

In comparative example 8, a primary-holding time was short, such that unrecrystallized ferrite was generated in the steel sheet, and accordingly, YR exceeded 0.85, TS²×√EL exceeded 1.7×10⁶ (MPa)²%^{0.5}, and TS²×√HER exceeded 3.0×10⁶ (MPa) ²%^{0.5}.

In comparative example 9, a primary-cooling stop temperature was high, such that TS²×√EL was less than 0.7×10⁶ (MPa)²%^{0.5}, and TS²×√HER was less than 1.4×10⁶ (MPa)²%^{0.5}.

In comparative example 10, a primarily cooling stop temperature was low, such that TS²×√EL was less than 0.7×10⁶ (MPa)²%^{0.5} and TS²×√HER was less than 1.4×10⁶ (MPa)²%^{0.5}.

In comparative example 11, an average secondary-cooling rate was low, such that the pearlite fraction including cementite exceeded 15%, and accordingly, TS²×√EL was less than 0.7×10⁶ (MPa)²%^{0.5} and TS²×√HER was less than 1.4×10⁶ (MPa)²%^{0.5}.

In comparative example 12, a secondary-holding temperature was high, such that YR was less than 0.7, TS²×√EL was less than 0.7×10⁶ (MPa)²%^{0.5}, and TS²×√HER was less than 1.4×10⁶ (MPa)²%^{0.5}.

In comparative example 13, a secondary-holding temperature was low, such that TS²×√EL was less than 0.7×10⁶ (MPa)²%^{0.5}, and TS²×√HER was less than 1.4×10⁶ (MPa)²%^{0.5}.

In comparative example 14, a secondary-holding time was short, such that TS²×√EL was less than 00.7×10⁶ (MPa)²%^{0.5}, and TS²×√HER was less than 1.4×10⁶ (MPa)²%^{0.5}.

In comparative example 32, the C content was low, such that YR was less than 0.7, TS²×√EL was less than 0.7×10⁶ (MPa)²%^{0.5}, and TS²×√HER was less than 1.4×10⁶ (MPa)²%^{0.5}.

In comparative example 33, the C content was high, such that unrecrystallized ferrite was generated, TS²×√EL was greater than 1.7×10⁶ (MPa)²%^{0.5}, and TS²×√HER was greater than 3.0×10⁶ (MPa)²%^{0.5}.

In comparative example 34, the Si content was high, such that embrittlement increased, and accordingly TS²×√EL was less than 0.7×10⁶ (MPa)²%^{0.5}, and TS²×√HER was less than 1.4×10⁶ (MPa)²%^{0.5}.

In comparative example 35, the Mn content was low, such that TS²×√EL was less than 0.7×10⁶ (MPa)²%^{0.5}, and TS²×√HER was less than 1.4×10⁶ (MPa)²%^{0.5}.

In comparative example 36, the Mn content was high, such that unrecrystallized ferrite was formed, TS²×√EL was greater than 1.7×10⁶ (MPa)²%^{0.5}, and TS²×√HER was greater than 3.0×10⁶ (MPa)²%^{0.5}.

In comparative example 37, the Al content was high, such that TS²×√EL was less than 0.7×10⁶ (MPa)²%^{0.5}, and TS²×√HER was less than 1.4×10⁶ (MPa)²%^{0.5}.

In comparative example 38, the Ti content was high, such that non-recrystallized ferrite was formed, YR exceeded 0.85, TS²×√EL exceeded 1.7×10⁶ (MPa)²%^{0.5}. and TS²×√HER exceeded 3.0×10⁶ (MPa)²%^{0.5}.

In comparative example 39, the Nb content was high, such that non-recrystallized ferrite was formed, YR exceeded 0.85, TS²×√EL exceeded 1.7×10⁶ (MPa)²%^{0.5}, and TS²×√HER exceeded 3.0×10⁶ (MPa)²%^{0.5}.

In comparative example 40, the V content was high, such that non-recrystallized ferrite was formed, YR exceeded 0.85, TS²×√EL exceeded 1.7×10⁶ (MPa)²%^{0.5}, and TS²×√HER exceeded 3.0×10⁶ (MPa)²%^{0.5}.

In comparative example 41, the Ti+Nb+V content was high, such that non-recrystallized ferrite was formed, YR exceeded 0.85, TS²×√EL exceeded 1.7×10⁶ (MPa) ²%^{0.5}, and TS²×√HER exceeded 3.0×10⁶ (MPa)²%^{0.5}.

Although the present disclosure has been described in detail through embodiments above, other forms of embodiments may also be possible. Accordingly, the technical spirit and scope of the claims described below are not limited to the embodiments.

## Claims

1. A steel sheet, comprising:
by weight%, C: 0.03-0.18%, Si: 0-0.70%, Mn: 0.25-1.80%, Al: 0-0.70%, P: 0.050% or less, S: 0.0300% or less, N: 0.0300% or less, Ti: 0-0.08%, Nb: 0-0.06%, V: 0-0.07%, Ti+Nb+V: 0.03-0.10%, Cr: 0-0.80%, Mo: 0-0.80%, Cu: 0-0.80%, Ni: 0-0.80%, B: 0-0.0050%, Ca: 0-0.050%, REM excluding Y: 0-0.050%, Mg: 0-0.050%, W: 0-0.50%, Zr: 0-0.50%, Sb: 0-0.50%, Sn: 0-0.50%, Y: 0-0.20%, Hf: 0-0.20%, and a balance of Fe and inevitable impurities; and
having a steel sheet microstructure including, by area%, pearlite containing cementite: 1-15%, and a balance of ferrite and inevitable structures,
wherein a yield ratio (YR) of the steel sheet is 0.70-0.85, and a product of a square of tensile strength of the steel sheet and a square root of an elongation (TS²×√EL) satisfies 0.7×10⁶-1.7×10⁶ (MPa)²%^{0.5}, and a product of a square of tensile strength of the steel sheet and a square root of hole expandability (TS²×√HER) satisfies 1.4×10⁶-3.0×10⁶ (MPa)²%^{0.5}.

2. The steel sheet of claim 1, wherein the steel sheet contains C in a range of 0.04-0.17%.

3. The steel sheet of claim 1, wherein the steel sheet contains Mn in a range of 0.27-1.78%.

4. The steel sheet of claim 1, wherein the steel sheet has a microstructure including, by area%, pearlite including cementite: 3-13%, and a balance of ferrite and inevitable structures.

5. The steel sheet of claim 1, wherein a yield ratio (YR=YS/TS), which is yield strength (YS) of the steel sheet divided by tensile strength (TS), satisfies 0.71-0.84.

6. The steel sheet of claim 1, wherein a product of a square of tensile strength of the steel sheet and a square root of an elongation (TS²×√EL) satisfies 0.71×10⁶-1.69×10⁶ (MPa) ²%^{0.5}.

7. The steel sheet of claim 1, wherein a product of a square of tensile strength of the steel sheet and a square root of hole expandability (TS²×√HER) satisfies 1.43×10⁶-2.93×10⁶ (MPa)²%^{0.5}.

8. A method of manufacturing a steel sheet, the method comprising:
heating an ingot or a slab including, by weight%, C: 0.03-0.18%, Si: 0-0.70%, Mn: 0.25-1.80%, Al: 0-0.70%, P: 0.050% or less, S: 0.0300% or less, N: 0.0300% or less, Ti: 0-0.08%, Nb: 0-0.06%, V: 0-0.07%, Ti+Nb+V: 0.03-0.10%, Cr: 0-0.80%, Mo: 0-0.80%, Cu: 0-0.80%, Ni: 0-0.80%, B: 0-0.0050%, Ca: 0-0.050%, REM excluding Y: 0-0.050%, Mg: 0-0.050%, W: 0-0.50%, Zr: 0-0.50%, Sb: 0-0.50%, Sn: 0-0.50%, Y: 0-0.20%, Hf: 0-0.20%, and a balance of Fe and inevitable impurities in a temperature range of 1000-1350°C;
manufacturing a hot-rolled steel sheet by hot-rolling the heated ingot or slab at a finish rolling temperature of 800-1000°C;
cooling the manufactured hot-rolled steel sheet, and coiling the steel sheet in a temperature range of 300-600°C;
heat-treating the coiled hot-rolled steel sheet in a temperature range of 650-800°C for 600-1700 seconds, and cold-rolling the steel sheet at a reduction ratio of 30-90%;
heating the rolled cold-rolled steel sheet in a temperature range of 740-860°C and primary-holding the steel sheet for 50 seconds or more;
primary-cooling the primarily held cold-rolled steel sheet to a temperature range of 600-760°C at an average cooling rate of 5°C/s or lower; and
secondary-cooling the primarily cooled cold-rolled steel sheet to a temperature range of 450-550°C at an average cooling rate of 5°C/s or more and 20°C/s or lower, secondary-holding the steel sheet in the above-mentioned temperature range for 50 seconds or more and cooling the steel sheet to room temperature.

9. The method of claim 8, wherein the ingot or slab contains C in the range of 0.04-0.17%.

10. The method of claim 8, wherein the ingot or slab contains Mn in a range of 0.27-1.78%.

11. The method of claim 8,
wherein the steel sheet cooled to room temperature after the secondary-holding has a steel sheet microstructure including, by area%, pearlite containing cementite: 1-15%, and a balance of ferrite and inevitable structures,
wherein a yield ratio (YR) of the steel sheet is 0.70-0.85, and a product of a square of tensile strength of the steel sheet and a square root of an elongation (TS²×√EL) satisfies 0.7×10⁶-1.7×10⁶ (MPa)²%^{0.5}, and a product of a square of tensile strength of the steel sheet and a square root of hole expandability (TS²×√HER) satisfies 1.4×10⁶-3.0×10⁶ (MPa) ²%^{0.5}.
